# FASCICULE DE BREVET EUROPEEN

(11) **EP 2 655 946 B1**
(45) Date de publication et mention de la délivrance du brevet: **15.11.2017**
(21) Numéro de dépôt: 11817402.8
(22) Date de dépôt: 20.12.2011
(51) Int. Cl.: F01P 7/14, G05D 23/02, F01P 7/16, F16K 31/00

(54) **DISPOSITIF DE COMMANDE DU DÉBIT D'UN FLUIDE DE REFROIDISSEMENT**
VORRICHTUNG ZUR STEUERUNG DER FLUSSRATE EINES KÜHLMITTELS
DEVICE FOR CONTROLLING THE FLOW RATE OF A COOLANT

(30) Priorité: 23.12.2010 FR 1061144
(43) Date de publication de la demande: 30.10.2013
(73) Titulaire: MECAPLAST France, 92140 Clamart (FR)
(72) Inventeur: LECHARTIER, Mickaël, F-62210 Avion (FR); QUEVALLIER, Jean-Claude, F-59810 Lesquin (FR)
(74) Mandataire: Delorme, Nicolas
(86) Numéro de dépôt international: PCT/FR2011/053065
(87) Numéro de publication internationale: WO 2012/085436

(56) Documents cités:
- FR-A1- 2 851 314
- JP-A- 60 256 692
- JP-A- 2009 127 589
- US-A1- 2005 224 592
- US-A1- 2009 205 589

## Description

La présente invention concerne un système de clapet de circuit secondaire, notamment un système de clapet de circuit secondaire pour un boîtier de sortie d'eau ou un collecteur d'entrée d'eau équipé d'un thermostat.

Il est connu de réguler la température du moteur d'un véhicule à l'aide d'un boîtier de sortie d'eau ou d'un collecteur d'entrée d'eau équipés d'un thermostat. Le thermostat commande le débit du fluide de refroidissement du moteur vers un radiateur. Le radiateur permet le refroidissement du fluide, notamment grâce à un courant d'air.

A cette fin, les thermostats existants, voir, par exemple US 2009/0205589 A1, sont notamment équipés d'une capsule dans laquelle se trouve un matériau tel que de la cire. En fonction de la température du fluide de refroidissement, la cire se dilate ou se rétracte. Un piston relié à la capsule est actionné en fonction de la contraction ou de la dilatation de la cire. Lorsque la cire se dilate, le piston déplace un clapet principal qui permet au fluide de refroidissement de circuler en direction du radiateur. Lorsque la cire est rétractée, le clapet principal est fermé et empêche le fluide de refroidissement de circuler vers le radiateur. Ainsi, la course du piston du thermostat est directement fonction de la température du fluide de refroidissement. A une température maximale du fluide de refroidissement circulant dans le moteur correspond une course nominale du piston.

Un clapet de by-pass (circuit secondaire), équipant les boîtiers de sortie d'eau, permet, lorsque le clapet principal est fermé et que le débit du fluide de refroidissement est important, de détourner une partie du fluide de refroidissement vers un circuit secondaire. C'est notamment le cas lorsque le moteur est encore froid. Le clapet de by-pass est également commandé par le thermostat.

Classiquement, les clapets de by-pass sont intégrés au thermostat. Leur ouverture et fermeture est commandée par le déplacement du piston du thermostat. Lorsque la cire se dilate (moteur chaud), le clapet de by-pass obture l'entrée du circuit secondaire.

En fonctionnement, lorsque le moteur est froid, le clapet principal est fermé et le clapet de by-pass est ouvert, et lorsque le moteur est chaud, le clapet principal est ouvert et le clapet de by-pass est fermé.

Il arrive, dans des cas rares, que la température du fluide de refroidissement devienne supérieure à la température maximale de fonctionnement (par exemple en cas d'arrêt du moteur chaud, ce dernier continuant de chauffer le fluide de refroidissement). Dans ce cas, le piston du thermostat effectue une course supérieure à sa course nominale, la cire continuant de se dilater. La sur-course du piston a pour effet d'appuyer contre le clapet de by-pass, pourtant déjà fermé.

Pour éviter que cela n'endommage le système, il est connu d'utiliser un ressort entre le clapet de by-pass et le piston du thermostat, pour compenser la sur-course du piston. Cependant, cette solution nécessite de prendre en compte au cours du dimensionnement du dispositif la longueur de la sur-course du piston en plus de la longueur de sa course, ce qui augmente l'encombrement du système.

Il est connu de s'affranchir de ce problème en recourant à un clapet de by-pass pénétrant dans un conduit de by-pass lors de la sur-course du piston. Cependant, cette solution impose des conditions de coaxialité sévères entre le conduit de by-pass d'une part, et le thermostat d'autre part.

Aussi la présente invention a-t-elle pour but de résoudre tout ou partie des inconvénients mentionnés ci-dessus.

A cet effet, la présente invention a pour objet un dispositif de commande du débit d'un fluide de refroidissement d'un moteur comprenant un bâti dans lequel sont ménagées deux chambres délimitées par une cloison, les deux chambres communiquant via un conduit, un clapet apte à pénétrer dans le conduit et un thermostat, caractérisé en ce que le dispositif comporte des moyens de guidage en translation du clapet par rapport au conduit et en ce que le clapet et le thermostat sont reliés par des moyens de liaison de type appui-plan.

L'invention présente ainsi l'avantage d'offrir un dispositif dont l'encombrement est réduit puisque la sur-course du piston du thermostat est compensée par la translation du clapet de by-pass dans le conduit. De plus, du fait de l'existence de moyens de guidage du clapet de by-pass, une liaison appui-plan suffit à lier le clapet de by-pass et le thermostat, de sorte que le dispositif selon l'invention s'affranchit des contraintes importantes de coaxialité des dispositifs existants. Le clapet de by-pass étant intégré au dispositif, et non au thermostat comme il est d'usage, cela permet également de disposer d'un dispositif modulaire compatible avec différents thermostats.

Préférentiellement, les moyens de guidage en translation comprennent des nervures coopérant avec le clapet, de sorte que le clapet se translate selon l'axe du conduit.

Selon une autre caractéristique du dispositif de commande du débit d'un fluide de refroidissement d'un moteur selon l'invention, les moyens de liaison de type appui-plan comprennent une surface plane du clapet maintenue en contact avec le thermostat par des moyens de maintien en contact.

Avantageusement, les moyens de maintien en contact comprennent un ressort de compression tendant à éloigner le clapet du conduit.

Selon une autre caractéristique du dispositif selon l'invention, celui-ci comprend un clapet de surpression apte à obturer le conduit, le clapet de surpression étant guidé selon l'axe du conduit par des moyens de translation et le clapet de surpression tendant à être maintenu dans une position fermée, dans laquelle le clapet obture le conduit, par des moyens de maintien en contact.

La présence d'un clapet de surpression permet notamment de réguler la pression amont et aval.

Selon une autre caractéristique du dispositif de commande de débit d'un fluide de refroidissement d'un moteur selon l'invention, les moyens de maintien en position fermée du clapet comprennent un ressort de compression.

Selon une autre caractéristique du dispositif de commande de débit d'un fluide de refroidissement d'un moteur selon l'invention, celui-ci comporte des moyens de fuite calibrée du fluide de refroidissement entre les chambres.

L'avantage de cette caractéristique est de permettre notamment d'équilibrer la pression entre les deux chambres amont et aval.

L'invention a également pour objet un boîtier de sortie d'eau d'un circuit de refroidissement d'un moteur, caractérisé en ce qu'il comporte un dispositif décrit précédemment.

On comprendra mieux les buts, aspects et avantages de la présente invention d'après la description donnée ci-après d'un mode de réalisation de la présente invention, donnée à titre d'exemple non limitatif, en se référant aux dessins annexés dans lesquels :
- La figure 1 est une vue de profil d'un thermostat appartenant à l'état de la technique connu,
- La figure 2 est une vue en coupe d'un dispositif de commande du débit du fluide de refroidissement d'un moteur selon un mode particulier de réalisation de l'invention, le thermostat étant en position fermée,
- La figure 3 est une vue en coupe d'un dispositif de commande du débit du fluide refroidissement d'un moteur selon un mode particulier de réalisation de l'invention, le thermostat étant en position ouverte,
- Les figures 4 et 5 sont des vues schématiques illustrant un passage muni de sections de fuite d'eau pour la fuite calibrée du fluide de refroidissement parcourant le dispositif selon l'invention,
- Les figures 6 et 7 sont des vues schématiques illustrant la tolérance de coaxialité entre le thermostat et le conduit.
- Les figures 8, 9 et 10 illustrent différents types d'écoulement du fluide de refroidissement dans le dispositif de commande du débit du fluide de refroidissement d'un moteur selon l'invention, pour différentes positions de fonctionnement du thermostat,
- Les figures 11 et 12 sont des vues schématiques illustrant des moyens de fuite calibrée entre les chambres d'un dispositif selon un mode particulier de réalisation de l'invention.

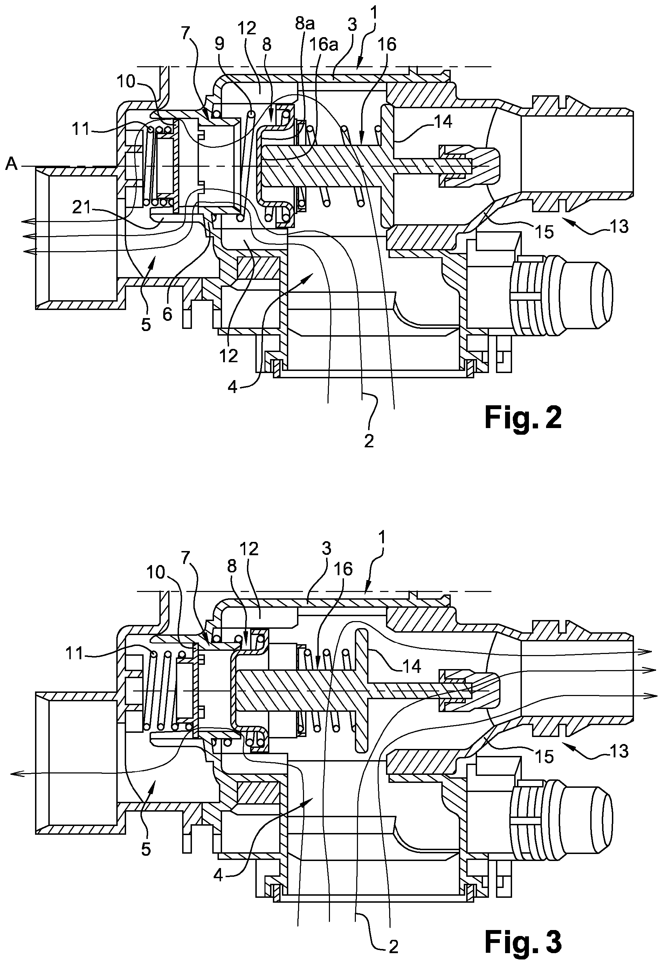

Les figures 2 et 3 représentent un dispositif 1 de commande du débit d'un fluide de refroidissement 2 d'un moteur comprenant un bâti 3. Le fluide de refroidissement peut être de l'eau. Le bâti 3 présente une cloison 6 séparant deux chambres 4, 5 : une chambre 4 d'arrivée du fluide de refroidissement 2 en provenance du moteur et une chambre 5 de retour vers un collecteur d'eau, si le fluide de refroidissement est de l'eau. La cloison 6 présente une ouverture prolongée par un conduit 7 permettant de faire communiquer les deux chambres 4,5.

Dans le mode de réalisation décrit, le dispositif 1 est un boîtier de sortie d'eau (le fluide de refroidissement 2 étant de l'eau). Le boîtier de sortie d'eau est l'organe du circuit de refroidissement qui gère la circulation du fluide de refroidissement 2 du moteur. En fonction de la température du fluide de refroidissement 2, le boîtier de sortie d'eau oriente ou pas le fluide de refroidissement 2 vers un radiateur afin de maintenir la température optimale de fonctionnement du moteur.

Le dispositif 1 comporte en outre un clapet 8. Le clapet 8 est un clapet de by-pass (circuit secondaire). Un ressort de compression 9 tend à maintenir le clapet 8 à distance de l'entrée du conduit 7. Le clapet 8 est apte à se mouvoir en translation le long de l'axe A du conduit 7. Le clapet 8 est également apte à obturer, au moins partiellement, l'entrée du conduit 7, l'une des extrémités du clapet 8 pouvant pénétrer à l'intérieur du conduit 7.

Des nervures 12, ménagées sur la paroi intérieure du bâti 3, permettent d'assurer le guidage en translation du clapet 8 par rapport au conduit 7. Les nervures 12 s'étendent longitudinalement selon une direction sensiblement parallèle à l'axe du conduit 7.

Un second clapet 10 permet d'obturer l'ouverture du conduit 7 située du côté de la chambre 5. Le clapet 10 est un clapet de surpression permettant de réguler la pression amont et aval à l'intérieur du dispositif 1. Pour ce faire, le clapet 10 est apte à se translater selon un axe sensiblement parallèle à l'axe du conduit 7, guidé par des prolongements 21 s'étendant longitudinalement dans la direction de l'axe du conduit 7. Le clapet 10 tend à être maintenu en position fermée par un ressort de compression 11.

Le dispositif 1 intègre en outre un thermostat 13. Le thermostat 13 comprend notamment un clapet 14 apte à obturer un conduit 15 menant vers le radiateur du circuit de refroidissement. Le thermostat 13 comporte également une tige 16. La tige 16 peut se translater le long d'un axe sensiblement parallèle à l'axe du conduit 7.

La tige 16 coopère avec le clapet 8 pour réguler le débit du fluide de refroidissement traversant le conduit 7. La tige 16 et le clapet 8 sont liés par des moyens de liaison de type appui-plan. Ces moyens de liaison appui-plan comprennent la surface 8a extérieure plane du clapet 8 et l'extrémité plane 16a de la tige 16, maintenues en contact par le ressort de compression 9.

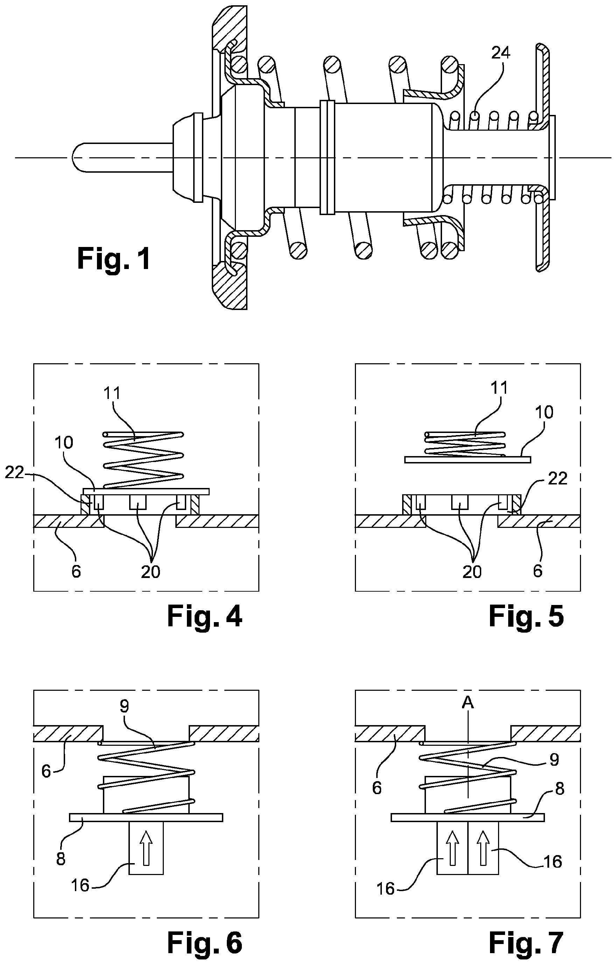

Du fait du guidage en translation entre le clapet 8 et le conduit 7 et de la présence de moyens de liaison appui-plan entre le thermostat 13 et le clapet 8, il est possible de tolérer un défaut de coaxialité entre la tige 16 du thermostat 13 et le conduit 7 supérieur à celui toléré par les systèmes existants. Il en résulte notamment un assemblage simple. Ainsi, le dispositif 1 peut fonctionner en dépit d'un certain défaut d'alignement de la tige 16 par rapport au clapet 8 (lui-même aligné avec le conduit 7), comme cela est montré schématiquement sur les figures 6 et 7. Sur la figure 6 apparaît la position nominale de la tige 16 du thermostat 13. Sur la figure 7 apparaissent les positions extrêmes de la tige 16 par rapport à l'axe A du conduit 7.

De plus, en cas de sur-course de la tige 16, le clapet 8 se translate à l'intérieur du conduit 7. Ainsi, la sur-course du piston est compensée par la translation du clapet 8 à l'intérieur du conduit 7. Le dispositif 1 offre une plus grande compacité que les dispositifs dont la sur-course du thermostat est compensée par un ressort de compression 24, comme cela est visible sur la figure 1.

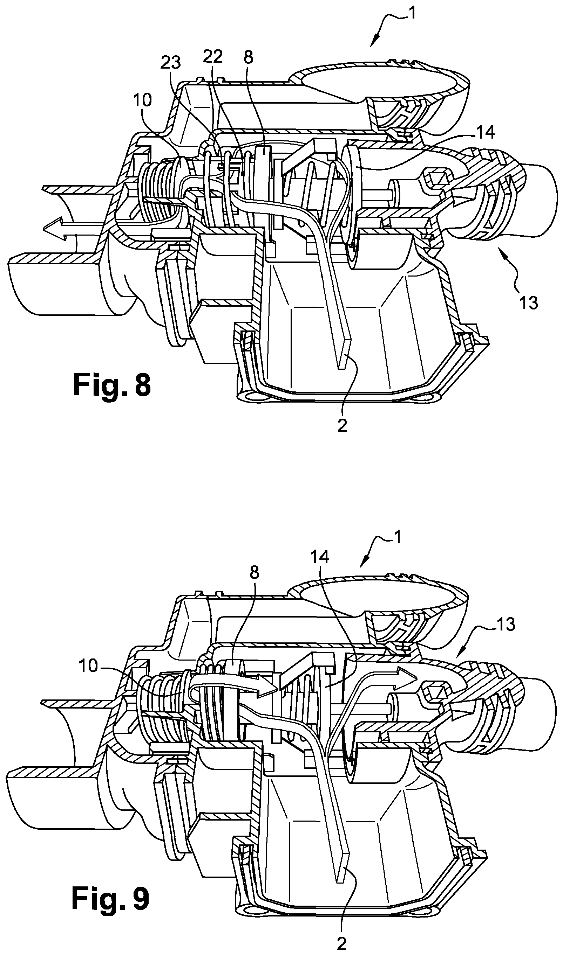

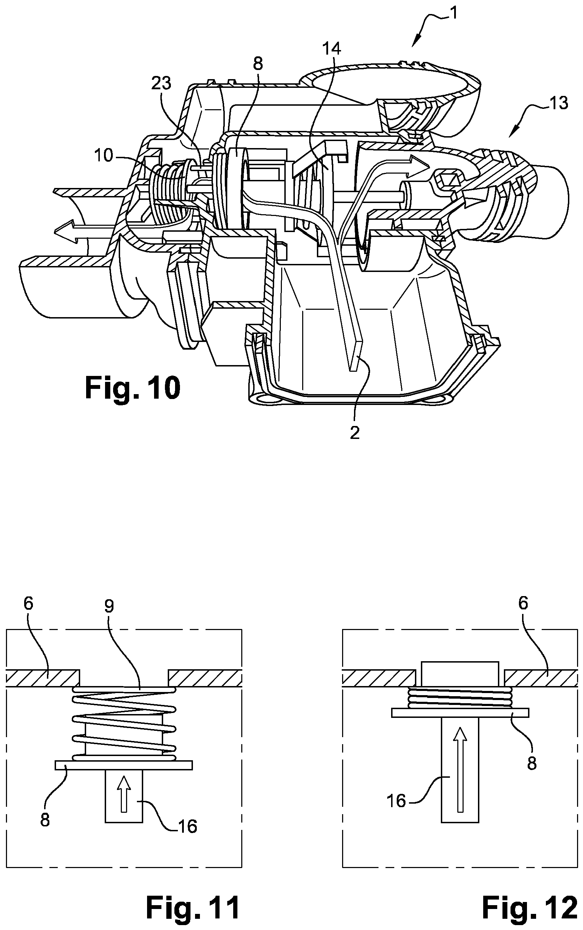

Afin de permettre d'équilibrer la pression entre les chambres 4, 5 en amont et en aval du dispositif 1, il est prévu des moyens de fuite calibrée. Ces moyens de fuite calibrée peuvent être réalisés par une différence de diamètre entre la cloison 6 ou le conduit 7 et la partie du clapet 8 apte à pénétrer dans le conduit 7, comme cela est visible sur les figures 11 et 12. Ils peuvent également être réalisés par un trou (non représenté) dans le clapet 8 ou par un passage muni de sections de fuite 20, comme cela est montré schématiquement sur les figures 4 et 5. Comme cela est visible sur ces figures et sur les figures 8 à 10, le conduit 7 peut comporter une bague 22 munie de dents 23 s'étendant longitudinalement dans une direction sensiblement parallèle à la direction A du conduit 7. Entre chaque dent 23 est délimité un espace permettant une fuite calibrée du fluide de refroidissement 2 et définissant une section de fuite 20. La bague 22 peut être solidaire de la cloison 6, du clapet 10 ou du clapet 8.

Lorsque le moteur est froid, le clapet 14 du thermostat 13 obture le conduit 15 menant au radiateur, comme cela est représenté sur la figure 2. Le fluide de refroidissement 2 circule alors au travers du conduit 7, le clapet 8 n'obturant pas le conduit 7 et le clapet 10 étant ouvert. Le fluide de refroidissement 2 entre alors dans la chambre 5 et le circuit de by-pass (circuit secondaire).

Lorsque le moteur est chaud, la tige 16 se translate, ce qui a pour effet de déplacer le clapet 14, libérant le passage vers le radiateur pour le fluide de refroidissement 2, comme cela est visible sur la figure 3. La pression exercée sur la surface du clapet 10 n'est pas suffisante pour qu'il se dégage de sa position fermée. Le clapet 8 de by-pass est fermé, seule une partie du fluide de refroidissement 2 passe au travers du conduit 7 grâce aux moyens de fuite calibrée. Cette fuite calibrée est représentée sur la figure 3 par une flèche de moindre épaisseur.

Les figures 8 à 10 illustrent le fonctionnement du dispositif 1 de commande de débit d'un fluide de refroidissement 2 d'un moteur dans un circuit de refroidissement, et l'écoulement du fluide de refroidissement 2 dans le dispositif 1, lorsque le thermostat 13 est fermé (figure 8), lorsque le thermostat 13 est ouvert à faible débit (figure 9), et lorsque le thermostat 13 est ouvert à fort débit (figure 10).

Bien entendu, l'invention n'est nullement limitée au mode de réalisation décrit ci-dessus et illustré par les différentes figures, ce mode de réalisation n'ayant été donné qu'à titre d'exemple. Des modifications restent possibles, notamment du point de vue de la constitution des divers éléments ou par la substitution d'équivalents techniques, sans pour autant sortir du domaine de l'invention.

Ainsi, le dispositif 1 peut être également un collecteur d'entrée d'eau d'un circuit de refroidissement d'un moteur.

## Revendications

1. Dispositif (1) de commande du débit d'un fluide de refroidissement (2) d'un moteur comprenant un bâti (3) dans lequel sont ménagées deux chambres (4,5) délimitées par une cloison (6), les deux chambres (4,5) communiquant via un conduit (7), un clapet (8) apte à pénétrer dans le conduit (7) et un thermostat (13), **caractérisé en ce que** le dispositif (1) comporte des moyens de guidage en translation du clapet (8) par rapport au conduit (7) et **en ce que** le clapet (8) et le thermostat (13) sont reliés par des moyens de liaison de type appui-plan.

2. Dispositif (1) de commande du débit d'un fluide de refroidissement (2) d'un moteur selon la revendication 1, **caractérisé en ce que** les moyens de guidage en translation comprennent des nervures (12) coopérant avec le clapet (8), de sorte que le clapet (8) se translate selon l'axe (A) du conduit (7).

3. Dispositif (1) de commande du débit d'un fluide de refroidissement (2) d'un moteur selon la revendication 1 ou la revendication 2, **caractérisé en ce que** les moyens de liaison de type appui-plan comprennent une surface (8a) plane du clapet (8) maintenue en contact avec le thermostat (13) par des moyens de maintien en contact.

4. Dispositif (1) de commande du débit d'un fluide de refroidissement (2) d'un moteur selon la revendication 3, **caractérisé en ce que** les moyens de maintien en contact comprennent un ressort (9) de compression tendant à éloigner le clapet (8) du conduit (7).

5. Dispositif (1) de commande du débit d'un fluide de refroidissement (2) d'un moteur selon l'une quelconque des revendications 1 à 4, **caractérisé en ce qu'**il comprend un clapet (10) de surpression apte à obturer le conduit (7), le clapet (10) de surpression étant guidé selon l'axe (A) du conduit (7) par des moyens de translation et le clapet (10) de surpression tendant à être maintenu dans une position fermée, dans laquelle le clapet (10) obture le conduit (7), par des moyens de maintien en contact.

6. Dispositif (1) de commande du débit d'un fluide de refroidissement (2) d'un moteur selon la revendication 5, **caractérisé en ce que** les moyens de maintien en position fermée du clapet (10) comprennent un ressort (11) de compression.

7. Dispositif de commande du débit d'un fluide de refroidissement d'un moteur selon l'une quelconque des revendications 1 à 6, **caractérisé en ce qu'**il comporte des moyens de fuite calibrée du fluide de refroidissement entre les chambres.

8. Boîtier de sortie d'eau d'un circuit de refroidissement d'un moteur, **caractérisé en ce qu'**il comporte un dispositif (1) selon l'une quelconque des revendications 1 à 7.

## Patentansprüche

1. Vorrichtung (1) zur Steuerung der Flussrate einer Motorkühlflüssigkeit (2), umfassend einen Rahmen (3), in dem zwei Kammern (4, 5) ausgebildet sind, die durch eine Trennwand (6) begrenzt sind, wobei die zwei Kammern (4, 5) über eine Leitung (7) kommunizieren, eine Klappe (8), die dazu in der Lage ist, in die Leitung (7) einzudringen, und einen Thermostat (13), **dadurch gekennzeichnet, dass** die Vorrichtung (1) Mittel zur translatorischen Führung der Klappe (8) in Bezug auf die Leitung (7) enthält und dadurch, dass die Klappe (8) und der Thermostat (13) durch Verbindungsmittel des Plananlage-Typs verbunden sind.

2. Vorrichtung (1) zur Steuerung der Flussrate einer Motorkühlflüssigkeit (2) nach Anspruch 1, **dadurch gekennzeichnet, dass** die Mittel zur translatorischen Führung Rippen (12) umfassen, die mit der Klappe (8) zusammenwirken, sodass die Klappe (8) entlang der Achse (A) der Leitung (7) translatiert.

3. Vorrichtung (1) zur Steuerung der Flussrate einer Motorkühlflüssigkeit (2) nach Anspruch 1 oder Anspruch 2, **dadurch gekennzeichnet, dass** die Verbindungsmittel vom Plananlage-Typ eine plane Fläche (8a) der Klappe (8) umfassen, die durch Inkontakthaltemittel mit dem Thermostat (13) in Kontakt gehalten wird.

4. Vorrichtung (1) zur Steuerung der Flussrate einer Motorkühlflüssigkeit (2) nach Anspruch 3, **dadurch gekennzeichnet, dass** die Inkontakthaltemittel eine Druckfeder (9) umfassen, die dazu tendiert, die Klappe (8) von der Leitung (7) abzurücken.

5. Vorrichtung (1) zur Steuerung der Flussrate einer Motorkühlflüssigkeit (2) nach einem der Ansprüche 1 bis 4, **dadurch gekennzeichnet, dass** sie eine Überdruckklappe (10) umfasst, die dazu in der Lage ist, die Leitung (7) zu verschließen, wobei die Überdruckklappe (10) durch Translationsmittel entlang der Achse (A) der Leitung (7) geführt wird und die Überdruckklappe (10) dazu tendiert, durch Inkontakthaltemittel in einer geschlossenen Stellung gehalten zu werden, in der die Klappe (10) die Leitung (7) verschließt.

6. Vorrichtung (1) zur Steuerung der Flussrate einer Motorkühlflüssigkeit (2) nach Anspruch 5, **dadurch gekennzeichnet, dass** die Mittel zum Halten der Klappe (10) in geschlossener Stellung eine Druckfeder (11) umfassen.

7. Vorrichtung zur Steuerung der Flussrate einer Motorkühlflüssigkeit nach einem der Ansprüche 1 bis 6, **dadurch gekennzeichnet, dass** sie kalibrierte Mittel zum Entweichen der Kühlflüssigkeit zwischen den Kammern enthält.

8. Wasserablaufgehäuse eines Motorkühlkreislaufs, **dadurch gekennzeichnet, dass** es eine Vorrichtung (1) nach einem der Ansprüche 1 bis 7 enthält.

## Claims

1. A device (1) for controlling the flow rate of a coolant (2) of a motor comprising a frame (3) in which two chambers (4, 5) delimited by a partition (6) are arranged, the two chambers (4, 5) communicating via a conduit (7), a valve (8) capable of penetrating into the conduit (7) and a thermostat (13), **characterized in that** the device (1) includes means for guiding the valve (8) in translation relative to the conduit (7) and **in that** the valve (8) and the thermostat (13) are linked by flat-type linking means.

2. The control device (1) of the flow rate of a coolant (2) of a motor according to claim 1, **characterized in that** the translation guide means comprise ribs (12) cooperating with the valve (8), such that the valve (8) is translated along the axis (A) of the conduit (7).

3. The control device (1) of the flow rate of a coolant (2) of a motor according to claim 1 or claim 2, **characterized in that** the flat-type linking means comprise a flat surface (8a) of the valve (8) held in contact with the thermostat (13) by contact holding means.

4. The control device (1) of the flow rate of a coolant (2) of a motor according to claim 3, **characterized in that** the contact holding means comprise a compression spring (9) aiming to move the valve (8) away from the conduit (7).

5. The control device (1) of the flow rate of a coolant (2) of a motor according to any one of claims 1 to 4, **characterized in that** it comprises a pressure relief valve (10) capable of closing the conduit (7), the pressure relief valve (10) being guided along the axis (A) of the conduit (7) by translation means and the pressure relief valve (10) aiming to be held in a closed position, in which the valve (10) closes the conduit (7) by contact holding means.

6. The control device (1) of the flow rate of a coolant (2) of a motor according to claim 5, **characterized in that** the means for holding the valve (10) in a closed position comprise a compression spring (11).

7. The control device of the flow rate of a coolant of a motor according to any one of claims 1 to 6, **characterized in that** it includes calibrated leakage means of the coolant between the chambers.

8. A water outlet housing of a cooling circuit of a motor, **characterized in that** it includes a device (1) according to any one of claims 1 to 7.
